# EUROPEAN PATENT APPLICATION

(11) **EP 0 769 746 A1**
(43) Date of publication of application: **23.04.1997**
(21) Application number: 96307643.5
(22) Date of filing: 18.10.1996
(51) Int. Cl.: G06F 12/06

(54) **Storage device and method accessing it**

(30) Priority: 20.10.1995 US 546004
(71) Applicant: SYMBIOS LOGIC INC., Fort Collins, Colorado 80525 (US)
(72) Inventor: Jander, Mark J., Colorado Springs, CO 80920 (US)
(74) Representative: Gill, David Alan

(57) **Abstract**

The invention provides for a storage device (400, 524) that includes a first set of data and a second set of data. The first set of data is stored in the storage device beginning at a first address in a first direction and a second set of data is stored in the storage device beginning at a second address in a second direction. The second address is determined by inverting the first address. The first set of data is accessed by receiving an address and an indication that the first set of data is accessed by inverting the received address and accessing the second set of data with the inverted address, which is the second address, in response to receiving an indication that the second set of data is to be accessed.

## Description

The present invention relates to a data processing method and apparatus and in particular, but not exclusively, to a method and apparatus for storing instructions and data in a data processing system.

The basic input/output system (BIOS) is a set of built in software routines that often comprises less than 32 KB of code. The BIOS controls many of the most important functions of a personal computer, such as the interpretation of keystrokes and communications through various input/output (I/O) ports. The BIOS tests a data processing system every time it is turned on and also can provide for automatic allocation of system resources. The BIOS serves as a link between the software and hardware of a computer. In many personal computers, the BIOS is entirely hard coded in the form of programmable read only memory (PROM) chips. The BIOS and other PROM based programs are often called firmware.

The BIOS found in most computers have more than one function. Typically, the BIOS includes routines that test the computer, routines that allow the software to control the hardware to allow for smooth seamless interaction between the software and hardware components, routines for determining what adapters and peripherals have been installed within the computer, and routines for handling request for I/O ports and memory assignments.

Every time a computer is turned on, a system BIOS is loaded into the random access memory (RAM) of the computer. The BIOS executes a series of diagnostic routines and system checks often called a power-on self test (POST) routine to insure the hardware of the computer is functioning properly before other software is executed. The POST routine checks the circuits of the system board and memory, the keyboard, storage device, and each expansion board or adapter. Additionally, the system BIOS looks for ad-in BIOS routines, initializes devices using routines already in BIOS, and starts the disk boot-up. With the introduction of "plug-and-play" systems, a structured initialization process that involves setting up system resources occurs.

Additionally, the system BIOS allows for the addition of ad-in BIOS. During initialization, the BIOS code reads through a selected address range set aside for firmware looking for additional code or BIOS stored on ROM chips in adapters or expansion boards connected to the computer. This ad-in BIOS provides the code necessary to control the adapter or expansion boards and is loaded automatically whenever the computer system boots-up.

Newer adapters have been designed to provide multiple functions, such as, video and communications in a single adapter or expansion board. To provide for dual functions in such a adapter, it is necessary to provide a separate set of BIOS code for each function. With current procedures, separate ROM chips are required for each BIOS or if the BIOSes are stored in the same ROM chip, the BIOSes are stored sequentially within the ROM. Storing the BIOSes adjacent to each other results in problems when one or both of the BIOSes change in size. BIOS often may be updated or replaced with new versions. The use of two ROMs or PROMs to store dual BIOSes in adapters providing dual functions results in an increased cost and size. Therefore, it would be advantageous to have an improved method and apparatus for storing multiple sets of BIOSes in a single memory device.

According to one aspect of the present invention, there is provided a storage device having a first end and a second end, wherein an address of the second end is an inversion of the address of the first end, and the storage device is arranged to include a first set of data stored beginning at the first address and advancing towards the second end; and a second set of data stored beginning at the second end and advancing towards the first end, wherein the address of the second end is an inversion of the address of the first end, wherein the first set of data in the storage device is accessed using the first address and wherein the second set of data in the storage device is accessed by inverting the first address.

Preferably, the storage device comprises a read only memory, or a random access memory.

According to another aspect of the present invention, there is provided a method of accessing a storage device comprising:
storing a first set of data in the storage device, wherein the first set of data is stored as a block of data beginning at a first address, storing a second set of data in the storage device, wherein the second set of data is stored as a block of data beginning at a second address determined by inverting the first address, receiving an address and an indication of which set of data is to be accessed, accessing the first set of data using the received address in response to an indication that the first set of data is to be accessed, and accessing the second set of data by inverting the received addressing and using the inverted address to access the second set of data in response to an indication that the second set of data is to be accessed.

Advantageously, the step of storing a first set of data and the step of storing a second set of data comprises storing a first set of data and a second set of data in a random access memory. Also, the step of storing a first set of data can preferably comprise storing a first BIOS and/or the step of storing a second set of data can preferably comprise storing a second BIOS in the storage device.

The present invention provides a storage device that includes a first set of data and a second set of data. The first set of data is stored in the storage device beginning at a first address in a first direction and a second set of data is stored in the storage device beginning at a second address in a second direction. The second address is determined by inverting the first address. The first set of data is accessed by receiving an address and an indication that the first set of data is to be accessed. The second set of data is accessed by inverting the received address and accessing the second set of data with the inverted address, which is the second address, in response to receiving an indication that the second set of data is to be accessed.

The storage device includes a first and second end. The first address may begin at the first end with the second address being located at the second end such that data is stored beginning at these addresses and in a direction towards the center of the storage device. The storage device may be connected to a adapter or an I/O device having two functions. With each set of data being associated with one of the two functions. According to the present invention, these two sets of data may be BIOSes associated with each of the functions.

According to yet another aspect of the present invention, there is provided a processing device having a first function, a second function, and a storage device including a first set of data associated with the first function and a second set of data associated with the second function, the first set of data being stored in the storage device in a first direction beginning at a first address and the second set of data being stored in the storage device in a second direction beginning at a second address, wherein the second address is determined by inverting the first address.

Preferably, the device comprises an adapter. Also, the first function may comprise a video function, and/or the second function may comprise a communications function. Further, the storage device may comprise a random access memory or a read only memory. The first set of data may advantageously comprise a BIOS for the first function, and/or the second set of data may comprise a BIOS for the second function. In particular, the first address is 0000h and the second address is FFFFh.

According to still another aspect of the present invention, there is provided a data processing system comprising a processor, a memory, a bus connecting the memory and the processor and a device connected to the bus , the device includes a storage device having a first set of data and a second set of data, the first set of data being stored in the storage device in a first direction beginning at a first address and the second set of data being stored int eh storage device in a second direction beginning at a second address, wherein the second address is an inversion of the first address.

Preferably the device comprises an adapter. Advantageously, the first function is a video function and/or the second function is a communications function. The storage device may comprise a read only memory and the bus a PCI bus.

The present invention advantageously relates to a method and apparatus for reducing the amount of memory required to store multiple BIOSes in a memory device.

The invention provides for a storage device that includes a first set of data and a second set of data. The first set of data is stored in the storage device beginning at a first address in a first direction and a second set of data is stored in the storage device beginning at a second address in a second direction. The second address is determined by inverting the first address. The first set of data is accessed by receiving an address and an indication that the first set of data is to be accessed. The second set of data is accessed by inverting the received address and accessing the second set of data with the inverted address, which is the second address, in response to receiving an indication that the second set of data is to be accessed.

The invention is described further hereinafter, by way of example only, with reference to the accompanying drawings in which:
Fig. 1 is a data processing system, personal computer system in which the present invention can be employed is depicted;
Fig. 2 is a block diagram of personal computer system illustrating the various components of personal computer system in accordance with the present invention;
Fig. 3 is a diagram of a 64 KB dual BIOS expansion RAM;
Fig. 4 is a ROM which includes BIOS for device 1 and BIOS for device 0;
Fig. 5 is a block diagram of a multi-function device including a single storage device with two BIOSes is depicted according to the present invention; and
Fig. 6 is a flow diagram of a process for reading data from a ROM containing dual BIOSes as stored in Fig. 4 according to the present invention.

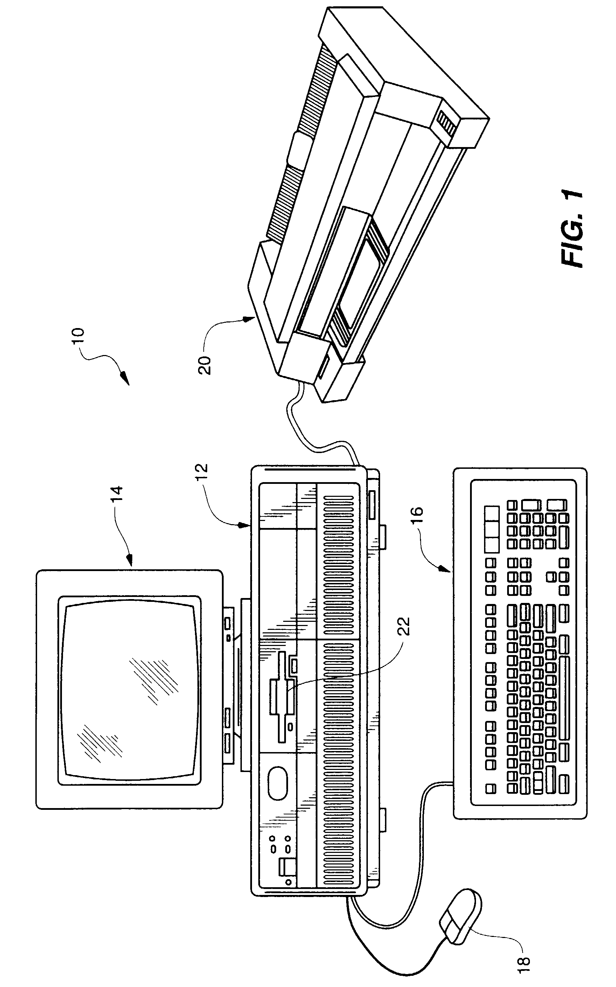

Referring now to the figures, and in particular to Fig. 1, a data processing system, personal computer system 10, in which the present invention can be employed is depicted. As shown, personal computer system 10 comprises a number of components, which are interconnected together. More particularly, a system unit 12 is coupled to and can drive an optional monitor 14 (such as a conventional video display). The system unit 12 also can be optionally coupled to input devices such as a PC keyboard 16 or a mouse 18. Apple mice have only one button so this is unnecessary. An optional output device, such as a printer 20, also can be connected to the system unit 12. Finally, system unit 12 may include one or more mass storage devices such as the diskette drive 22.

As will be described below, the system unit 12 responds to input devices, such as PC keyboard 16, the mouse 18, or local area networking interfaces. Additionally, input/output (I/O) devices, such as floppy diskette drive 22, display 14, printer 20, and local area network communication system are connected to system unit 12 in a well known manner. Of course, those skilled in the art are aware that other conventional components can be connected to the system unit 12 for interaction therewith. In accordance with the present invention, personal computer system 10 includes a system processor that is interconnected to a random access memory (RAM), a read only memory (ROM), and a plurality of I/O devices.

In normal use, personal computer system 10 can be designed to give independent computing power to a small group of users as a server or a single user and is inexpensively priced for purchase by individuals or small businesses. In operation, the system processor functions under an operating system, such as Microsoft's Windows 95, IBM's OS/2 operating system or Apple Computer Corporation's Mac OS, or DOS. OS/2 is a registered trademark of International Business Machines Corporation. "Mac OS" is a registered trademark of Apple Computer Corporation.

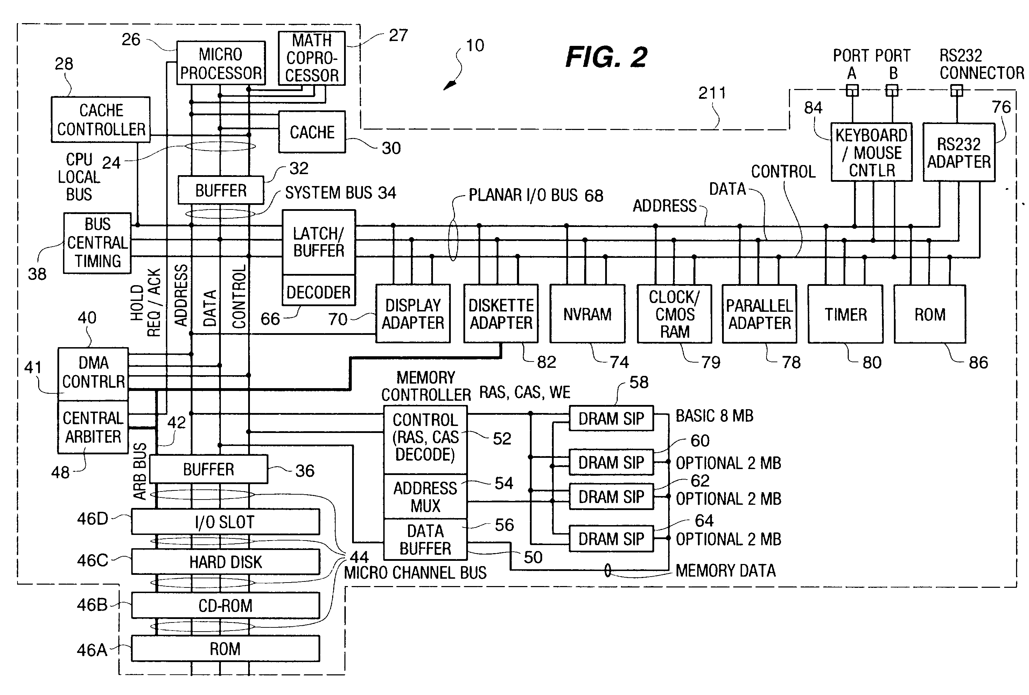

Prior to relating the above structure to the present invention, a summary of the operation in general of personal computer system 10 may merit review. Referring to Fig. 2, there is shown a block diagram of personal computer system 10 illustrating the various components of personal computer system 10 in accordance with the present invention. Fig. 2 further illustrates components of motherboard 211 and the connection of motherboard 211 to I/O slots 46a-46d and other hardware of personal computer system 10. Connected to motherboard 211 is the system central processing unit (CPU) 26 comprised of a microprocessor which is connected by a high speed CPU local bus 24 through a bus controlled timing unit 38 to a memory control unit 50 which is further connected to a volatile random access memory (RAM) 58.

While the present invention is described hereinafter with particular reference to the system block diagram of Fig. 2, it is to be understood at the outset of the description which follows, it is contemplated that the apparatus and methods in accordance with the present invention may be used with other hardware configurations of the motherboard. For example, the system processor could be an Intel or Motorola microprocessor. These particular microprocessors can operate in a real addressing mode or a protected addressing mode. Each mode provides an addressing scheme for accessing different areas of the microprocessor's memory.

Returning now to Fig. 2, CPU local bus 24 (comprising data, address and control components) provides for the connection of CPU 26, an optional math coprocessor 27, a cache controller 28, and a cache memory 30. Also coupled on CPU local bus 24 is a buffer 32. Buffer 32 is itself connected to a slower speed (compared to the CPU local bus) system bus 34, also comprising address, data and control components. System bus 34 extends between buffer 32 and a further buffer 36. System bus 34 is further connected to a bus control and tiining unit 38 and a Direct Memory Access (DMA) unit 40. DMA unit 40 is comprised of a central arbitration unit 48 and a DMA controller 41. Buffer 36 provides an interface between the system bus 34 and an optional feature bus such as Peripheral Component Interconnect (PCI) bus 44. Other bus architectures such as a an ISA bus or NuBus may be employed for PCI bus 44. NuBus is a registered trademark of Apple Computer Corporation. These memory modules represent the system memory of personal computer 10.

A further buffer 66 is coupled between system bus 34 and a motherboard I/O bus 68. Motherboard I/O bus 68 includes address, data, and control components respectively. Coupled along motherboard bus 68 are a variety of I/O adapters and other peripheral components such as display adapter 70 (which is used to drive an optional display 14), a clock 72, nonvolatile RAM 74 (hereinafter referred to as "NVRAM"), a RS232 adapter 76, a parallel adapter 78, a plurality of timers 80, a diskette adapter 82, a PC keyboard/mouse controller 84, and a read only memory (ROM) 86. The ROM 86 includes the system Basic Input/Output (BIOS) which provides the user transparent communications between many I/O devices.

Clock 72 is used for time of day calculations. NVRAM 74 is used to store system configuration data. That is, the NVRAM will contain values which describe the present configuration of the system. For example, NVRAM 74 contains information which describe the capacity of a fixed disk or diskette, the type of display, the amount of memory, etc. Of particular importance, NVRAM 74 will contain data which is used to describe the system console configuration; i.e., whether a PC keyboard is connected to the keyboard/mouse controller 84, a display controller is available or the ASCII terminal is connected to RS232 adapter 76. Furthermore, this data is stored in NVRAM 74 whenever a special configuration program is executed. The purpose of the configuration program is to store values characterizing the configuration of this system to NVRAM 76 which are saved when power is removed from the system.

Connected to keyboard/mouse controller 84 are ports A and B. These ports are used to connect a PC keyboard (as opposed to an ASCII terminal) and mouse to the PC system. Coupled to RS232 adapter unit 76 is an RS232 connector. An optional ASCII terminal can be coupled to the system through this connector.

Specifically, personal computer system 10 may be implemented utilizing any suitable computer such as the IBM personal computer, Apple Macintosh computer, or Sun workstation.

Dual function PCI devices require an expansion ROM BIOS for each function. Implementation of the BIOSes is most cost effective if both BIOSes can be included in a single memory device. PCI systems do not allow execution of BIOS from the expansion ROMs. The code and data must be downloaded to system memory in the computer and then executed. The PCI system BIOS scans all devices found at power up and down loads available BIOSes found. Both functions must support their own configuration space in an expansion ROM base address register. Additionally, access must be provided to this ROM when required. Each BIOS image must be separate and should only use the required amount of system memory. Any unused space in the ROM is returned to the system. To reduce the number of pins and reduce gate counts in implementation, a single memory expansion interface is employed according to the present invention. This single memory expansion interface is available to both functions provided by the adapter.

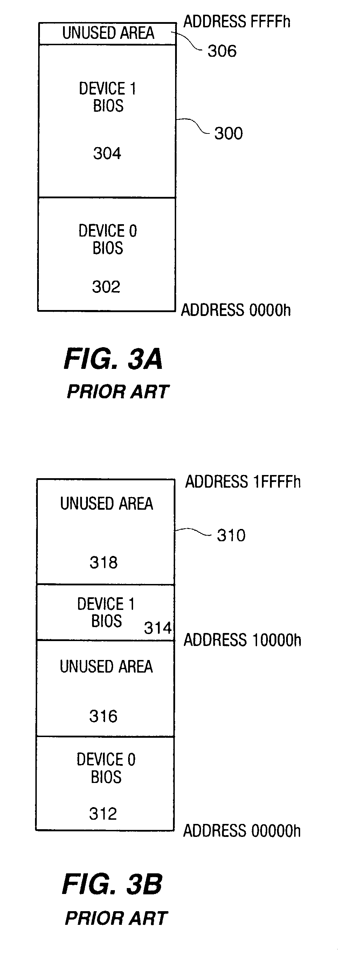

With reference now to Fig. 3A, a diagram of a 64 KB dual BIOS expansion ROM is depicted. As can be seen in ROM 300, BIOS 302 begins at address 0000h with BIOS 304 beginning immediately in the address space after BIOS 300. As can be seen in the depicted example, a portion 306 of memory in ROM 300 remains unused. In the depicted example, each BIOS begins at a lower address and is stored in contiguous address space with increasing address numbers.

In Fig. 3B, a diagram of a 128 KB dual BIOS expansion ROM 310 is depicted. As can be seen in ROM 310, BIOS 312 begins at address 00000h with BIOS 314 beginning at address 10000h. ROM 310 includes unused areas 316 and 318. In this example, BIOS 312 takes up 40 KB of room while BIOS 314 takes up 20 KB of room in ROM 310. Using presently known techniques, BIOS 312 and BIOS 318 would not fit in a 64 KB ROM as shown in Fig. 3A because under the normal division of space, ROM 300 would be divided into two 32 KB portions. With BIOS 312 taking 40 KB of room it would not fit into the area allotted.

Also, the size of the combined BIOSes are not necessarily known. As a result, the division of space within a single memory device is impossible to determine and hardcode in the logic. Additionally, if BIOS updates are required, these updates must fit within the predetermined size of the memory device. To eliminate the need for hard coding the division of the ROM space for each device or function, a ROM image for one of the functions is created in a backwards form according to the present invention.

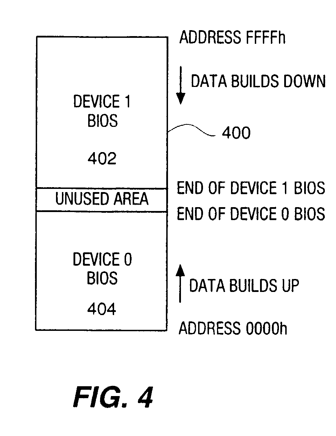

As can be seen with reference to Fig. 4, ROM 400 includes BIOS 402 for device 1 and BIOS 404 for device 0. BIOS 402 begins at address FFFFh and is built downward from the highest address towards the lowest address utilizing the required space in ROM 400. The other BIOS, BIOS 404 starts at the lowest address, address 0000h, and is built upward in ROM 400. According to the present invention, the address for BIOS 402 is inverted only within ROM 400. As a result, BIOSes of n-binary increments can be used with the total size of the expansion ROM being equal to or slightly greater than the combination of both. Externally, the PCI system would see ROM data building in the normal fashion (upward in addressing) for both functions. The PCI system would start down loading the reversed data found in BIOS 402, at the expansion ROM base address offset. This data would be inverted and become the highest address in ROM. The address would be incremented resulting in the ROM address being decremented and would continue until the ROM is completely downloaded.

As can be seen again with reference to Fig. 4, BIOS 404 for device 0 requires a total BIOS length of 16 KB and BIOS 402 for device 1 requires a total BIOS length of 44 KB. The total space required within ROM 400 is 60 KB, which allow both BIOSes to be stored in a 64 KB memory device. If the expansion ROM is divided equally, 128 KB would be required because BIOS 402 for device 2 requires more than 32 KB. According to the present invention, both BIOSes can be stored in a 64 KB device. The present invention employs software to reverse BIOS 402 when a complete BIOS image is built. Thus, according to the present invention, the end points of the BIOSes are flexible based on the needs of each BIOS. Although the example in Fig. 4 depicts a 64 KB ROM, the present invention can be implemented in memory device of other sizes and types.

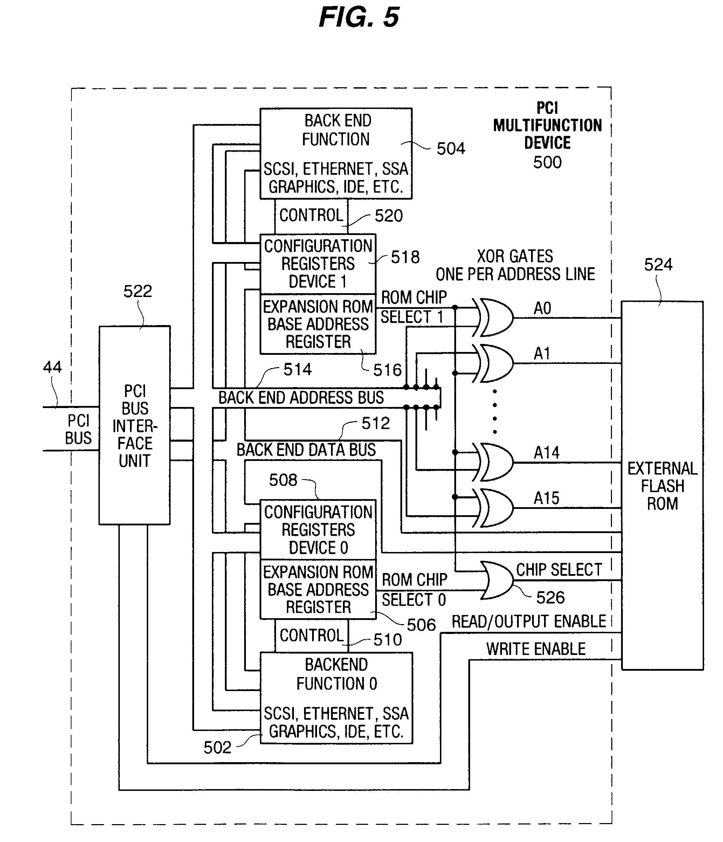

Turning now to Fig. 5, a block diagram of a multifunction device including a single storage device with two BIOSes is depicted according to the present invention. PCI multifunction device 500 is connected to bus 44 in personal computer system 10 within an I/O slot such as I/O slot 46d of Fig. 2. In the depicted example, multifunction device 500 includes two functions, backend function 502 for device 0 and backend function 504 for device 1. In the depicted example, backend function 0 is a graphics function, while backend function 504 provides a communications function, such as providing a connection to an ethernet system. Of course, other functions may be provided according to the present invention. Backend function 502 is connected to expansion ROM base address register 506 and configuration registers 508 via control lines 510. Backend function 502, expansion ROM base address register 506, and configuration registers 508 are connected to backend data bus 512 and backend address bus 514

Backend function 504 is connected to expansion ROM base address register 516 and configuration registers 518 by backend data bus 512 and backend address bus 514. Control of these registers are provided by control lines 520 connecting backend function 504 to these registers. Multifunction device 500 also includes a PCI bus interface unit 522, which is connected to PCI bus 44, backend data bus 512, and backend address bus 514. Multifunction device 500 also includes an external flash ROM 524 that has connections to backend data bus 512 and backend address bus 514. The connection to backend address bus 514 is provided by XOR gates A0 through A16 according to the present invention. In addition, external flash ROM 524 includes a read/output enable and a write enable connection to PCI bus interface unit 522.

In this manner, PCI multifunction device 500 is able to use a single ROM, external flash ROM 524, to store multiple BIOSes. Each function within PCI multifunction device 500 supports a set of configuration registers 508 and 518. An expansion ROM base address register for each function is loaded with a base address by the system BIOS providing a decode for a ROM chip select. When a comparison is made between the incoming address and the value of either of the expansion ROM base address register 506 or 516, an appropriate chip select is enabled, such as ROM chip select 1 or ROM chip select 0. If ROM chip select 0 is asserted, the incoming address is not inverted by the 16 XOR gates and the address is passed into external flash ROM 524 in a normal manner. If ROM chip select 1 is asserted, the incoming address is inverted before being passed on to the external flash ROM 524. Such a selection effectively addresses the external flash ROM 524 in a reversed manner. OR gate 526 with chip select 0 and ROM chip select 1 causes external flash ROM 524 to see both base address registers as a single function. In other words, OR gate 526 allows external flash ROM 524 to see both chip selects as a single chip select. The read/output enable and write signals are passed to external flash ROM 524 directly from PCI interface unit 522.

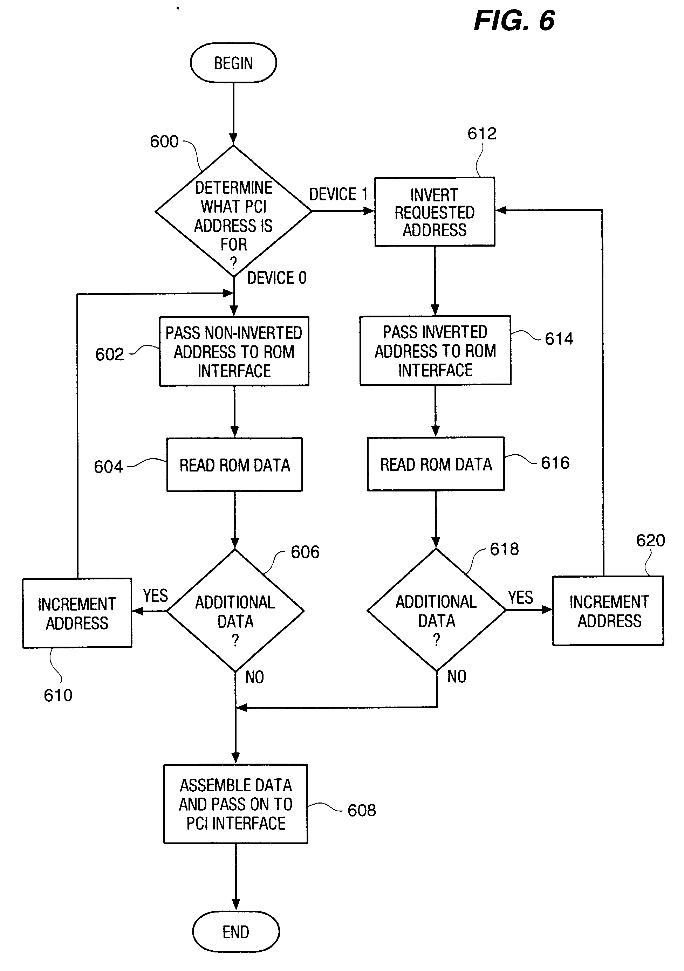

With reference now to Fig. 6, a process for reading data from a ROM containing dual BIOSes stored in the fashion depicted in Fig. 4 is depicted according to the present invention. The process begins by determining whether the BIOS for device 0 or device 1 is being read (step 600). If data for device 0 is being read, the process passes the noninverted address to the ROM interface (step 602). Thereafter, the process reads the data at the requested address from the ROM (step 604). The process then determines whether additional data is to be read from the ROM (step 606). If no additional data is to be read from the ROM, the process assembles the data and passes it to the PCI interface (step 608) with the process terminating thereafter. With reference again to step 606, if additional data is to read from the ROM, the address is incremented to the next address in the ROM (step 610) with the process then returning to step 604. The process continues until all ofthe data has been read from the ROM. At that point, the process assembles the data and passes on to the PCI interface (step 603) and then the process terminates.

If data is to be read from the BIOS for device 1, the process inverts the requested address (step 612). The beginning address is always 0000h in the depicted example. As a result, the inverted address is FFFFh. The inverted address is passed to the ROM interface (step 614). The process reads the data at the inverted address from the ROM (step 616). Then, a determination is made as to whether additional data is to be read from the ROM (step 618). If additional data is to be read from the ROM, the process then increments the address to be read (step 620). Again, the incremented address is then inverted, passed to the ROM interface, and read from the ROM as previously described in steps 612, 614, and 616. This process continues until all of the data is read. At that time, the data is assembled and passed on to the PCI interface (step 608), and then the process terminates.

While the invention has been particularly shown and described with reference to a preferred embodiment, it will be understood by those skilled in the art that various changes in form and detail may be made therein without departing from the spirit and scope of the invention.

## Claims

1. A storage device (400, 524) having a first end (404) and a second end (402), wherein an address of the second end (402) is an inversion of the address of the first end (404), and the storage device is arranged to include
a first set of data stored beginning at the first address and advancing towards the second end; and
a second set of data stored beginning at the second end and advancing towards the first end, wherein the address of the second end is an inversion of the address of the first end,
wherein the first set of data in the storage device (400) is accessed using the first address and wherein the second set of data in the storage device (400) is accessed by inverting the first address.

2. A device as claimed in Claim 1, further arranged with accessing means for accessing the first set of data and the second set of data.

3. A device as claimed in Claim 2, wherein the accessing means includes:
receiving means for receiving an address;
determination means for determining which set of data within the storage device is to be accessed;
retrieval means for retrieving data stored at the received address; and
inverting means for inverting the address in response to a determination that the second set of data is to be accessed, wherein the inverting means inverts the address prior to activation of the retrieval means.

4. A device as claimed in any one of Claims 1, 2 or 3, wherein the first set of data is associated with a first function and the second set of data is associated with a second function.

5. A device as claimed in Claim 4, wherein the first set of data is a BIOS for the first function and the second set of data is a BIOS for the second function.

6. A method of accessing a storage device (402, 524) comprising:
storing a first set of data in the storage device, wherein the first set of data is stored as a block of data beginning at a first address;
storing a second set of data in the storage device, wherein the second set of data is stored as a block of data beginning at a second address determined by inverting the first address;
receiving an address and an indication of which set of data is to be accessed;
accessing the first set of data using the received address in response to an indication that the first set of data is to be accessed; and
accessing the second set of data by inverting the received addressing and using the inverted address to access the second set of data in response to an indication that the second set of data is to be accessed.

7. A method as claimed in Claim 6, wherein the step of storing a first set of data and the step of storing a second set of data comprise storing the first set of data and storing the second set of data in a read only memory.

8. A processing device having
a first function;
a second function; and
a storage device (400, 524) including a first set of data associated with the first function and a second set of data associated with the second function, the first set of data being stored in the storage device in a first direction beginning at a first address and the second set of data being stored in the storage device in a second direction beginning at a second address, wherein the second address is determined by inverting the first address.

9. A data processing system (10) comprising:
a processor (26);
a memory;
a bus (24, 44) connecting the memory and the processor; and
a device (500) connected to the bus (24, 44), the device includes a storage device (524) having a first set of data and a second set of data, the first set of data being stored in the storage device (524) in a first direction beginning at a first address and the second set of data being stored int eh storage device in a second direction beginning at a second address, wherein the second address is an inversion of the first address.

10. A system as claimed in Claim 9, wherein the device is arranged for a first function and a second function, the first function being associated with the first set of data and the second function being associated with the second set of data.
